# EUROPEAN PATENT APPLICATION

(11) **EP 4 752 659 A1**
(43) Date of publication of application: **03.06.2026**
(21) Application number: 25218296.9
(22) Date of filing: 25.11.2025
(51) Int. Cl.: G05D 1/222, G05D 1/242, G05D 1/617, G05D 105/00, G05D 107/30, G05D 109/10, G05D 111/10, B60K 35/22, B60K 35/28, B60K 35/81, B60K 35/10

(54) **CRAWLER VEHICLE**

(30) Priority: 29.11.2024 IT 202400027078; 18.12.2024 IT 202400028929; 06.02.2025 IT 202500002259; 11.03.2025 IT 202500004972
(71) Applicant: PRINOTH S.p.A., 39049 Vipiteno (BZ) (IT)
(72) Inventor: STEINER, Günther, 39049 VIPITENO (BZ) (IT); KIRCHMAIR, Martin, 39049 VIPITENO (BZ) (IT); SALIS, Francesco, 39049 VIPITENO (BZ) (IT); PAOLETTI, Alberto, 39049 VIPITENO (BZ) (IT)
(74) Representative: Studio Torta S.p.A.

(57) **Abstract**

A crawler vehicle has a frame (2) ; a driver's cab (3) mounted on the frame (2); a seat (4) for a driver (C) of the crawler vehicle (1) arranged inside the driver's cab (3); a display (5), which is arranged in the driver's cab (3) and is configured to display a screen (S) reproducing operative information, wherein said screen is divided into a plurality of screen portions; and a control system (6), which is in communication with the display (5) and is configured to control the screen displayed by the display (5).

## Description

### CROSS-REFERENCE TO RELATED APPLICATIONS

This patent application claims priority from Italian patent applications no. 102024000027078 filed on November 29, 2024, no. 102024000028929 filed on December 18, 2024, no. 102025000002259 filed on February 6, 2025, and no. 102025000004972 filed on March 11, 2025, the entire disclosure of which is incorporated herein by reference.

### TECHNICAL SECTOR

The present invention relates to a crawler vehicle, preferably used for the preparation of ski runs.

### BACKGROUND OF THE INVENTION

As is well known, crawler type vehicles are commonly used to advance along off-road routes for the purpose of transporting goods or people or to carry out a wide range of different jobs, such as preparing the snowpack of ski runs or cleaning beaches, or for agricultural operations.

Typically, each crawler vehicle of a known type comprises a frame, a driver's cab mounted on the frame, and a pair of motorised tracks. In particular, the driver's cab is equipped with a seat for a driver and with a user interface, which is arranged near the seat, comprises a control device to allow the driver to control the crawler vehicle, and allows the display of crawler vehicle operational parameters, such as travel speed or remaining range of the crawler vehicle.

However, as the complexity of the working environment, the tasks to be performed and the crawler vehicle itself continues to increase, more and more information needs to be displayed in modern crawler vehicles and, as a result, currently known user interfaces are inadequate for this purpose.

### OBJECT OF THE INVENTION

An aim of the present invention is to realize a crawler vehicle that mitigates the drawbacks of the prior art disclosed herein.

In accordance with the present invention, a crawler vehicle is realized, preferably for the preparation of ski runs, the crawler vehicle being configured to advance in a travelling direction and comprising:
- a frame;
- a driver's cab mounted on the frame;
- a seat for a driver of the crawler vehicle arranged within the driver's cab;
- a screen, which is arranged in the driver's cab and is configured to display a screen reproducing operative information, wherein said screen is divided into a plurality of screen portions; and
- a control system, which is in communication with the screen and is configured to control the screen displayed by the screen.

Thanks to the present invention, the driver of the crawler vehicle can display on a single screen an amount of operative information appropriate to the complexity of the operational circumstances and can manage the screen displayed by the screen in a personalized manner.

In other words, the driver of the crawler vehicle can set the screen displayed by the display according to his/her preferences and display at any time all the operative information he/she needs.

In particular, said operative information comprises operational parameters of the crawler vehicle and/or information on the operations to be performed and/or on characteristics of the environment surrounding the crawler vehicle and/or images acquired outside the driver's cab and/or videos acquired outside the driver's cab.

In this way, it is possible to provide the driver of the crawler vehicle with all the necessary operative information to facilitate the driving and control tasks of the crawler vehicle.

In particular, the crawler vehicle comprises a user interface, which is in communication with the control system and is configured to receive commands from the driver of the crawler vehicle and to transmit said commands to the control system.

In more detail, the user interface is arranged in the proximity of the seat so as to be within reach of the driver of the crawler vehicle when said driver is seated on the seat.

In particular, the control system is configured to control the screen of the display so as to change the operative information reproduced by each screen portion, preferably as a function of the commands given by the driver of the crawler vehicle by means of the user interface.

In this way, the configuration of the screen displayed by the screen can be set based on the personal needs of each driver of the crawler vehicle.

In particular, the display extends for a first length along a first direction and for a second length along a second direction substantially perpendicular to the first direction; the first length being greater than three times the second length.

In this way, it is possible to display a large amount of operative information arranged in an aligned manner along the first direction.

In particular, the display has a curved profile so as to offer the driver of the crawler vehicle an immersive visual experience, reducing the distortion of the screen displayed and guaranteeing a wide field of vision to the driver.

In particular, the display is arranged in front of the seat or to the side of the seat.

In more detail, the driver's cab comprises a windscreen, two lateral windows, two lateral uprights, each of which is arranged between the windscreen and the respective lateral window, a lower platform, and a roof; the display extending from the roof of the driver's cab, preferably in proximity of the windscreen, or being supported by the lower platform of the driver's cab, preferably in proximity of the windscreen, or being fixed to one of the lateral uprights of the driver's cab.

In this way, it is possible to maintain an unobstructed view of the driver of the crawler vehicle through a central portion of the windscreen while said driver is seated on the seat. In practice, it is possible to prevent the screen from obstructing the driver's view through the windshield.

In particular, the control system is configured to control the screen displayed by the display so as to display in a first screen portion of the plurality of screen portions a representation of at least a portion of the crawler vehicle and a visual indicator indicative of the presence of obstacles in proximity of the crawler vehicle.

In this way, it is possible to inform the driver of the crawler vehicle about the possible presence of obstacles in proximity of a certain portion of the crawler vehicle.

In particular, the crawler vehicle comprises at least one acquisition device, which is in communication with the control system and is configured to acquire videos and/or images of the environment surrounding the crawler vehicle; the control system being configured to control the screen displayed by the display so as to display the videos and/or images acquired by the at least one acquisition device in a second screen portion of the plurality of screen portions, so as to provide the driver with a view outside the driver's cab.

In particular, the control system is configured to process the videos and/or the images detected by the at least one acquisition device, to identify a position and/or a conformation of reference elements in the environment surrounding the crawler vehicle as a function of said processed videos and/or images, and to indicate the contours of each reference element in the second portion of the screen displayed by the display.

In this way, it is possible to provide the driver of the crawler vehicle with information relating to the type and position of the reference elements in the environment surrounding the crawler vehicle.

In particular, the at least one acquisition device points in a direction substantially opposite to the travelling direction of the crawler vehicle; the control system being configured to control the screen displayed by the display so as to display in real time in a third screen portion of the plurality of screen portions the videos and/or the images acquired by the at least one acquisition device in the direction substantially opposite to the travelling direction of the crawler vehicle.

In this way, the rear-view mirrors mounted outside the driver's cab can be eliminated. Furthermore, since the screen is arranged within the driver's cab, it is possible to improve the driver's rear and side visibility as the driver is not forced to look through the driver's cab windows, which can be dirty or foggy and, consequently, can partially obstruct the driver's view outside the driver's cab.

### BRIEF DESCRIPTION OF THE DRAWINGS

Further characteristics and advantages of the present invention will become clear from the following description of non-limiting examples of embodiment thereof, with reference to the figures of the attached drawings, wherein:
- Figure 1 is a side view, with parts removed for clarity and schematised parts, of a crawler vehicle realized in accordance with the present invention;
- Figures 2-6 are perspective views, with parts removed for clarity and schematised parts, of a detail of the crawler vehicle of Figure 1 realized in accordance with respective forms of implementation;
- Figure 7 is a front view, with parts removed for clarity, of a screen of the crawler vehicle of Figure 1;

- Figure 8 is a plan view, with parts removed for clarity, of the screen of Figure 7; and
- Figures 9 and 10 are views of a detail of the screen of the display of Figure 7 according to respective display modes.

### DETAILED DESCRIPTION OF THE FIGURES

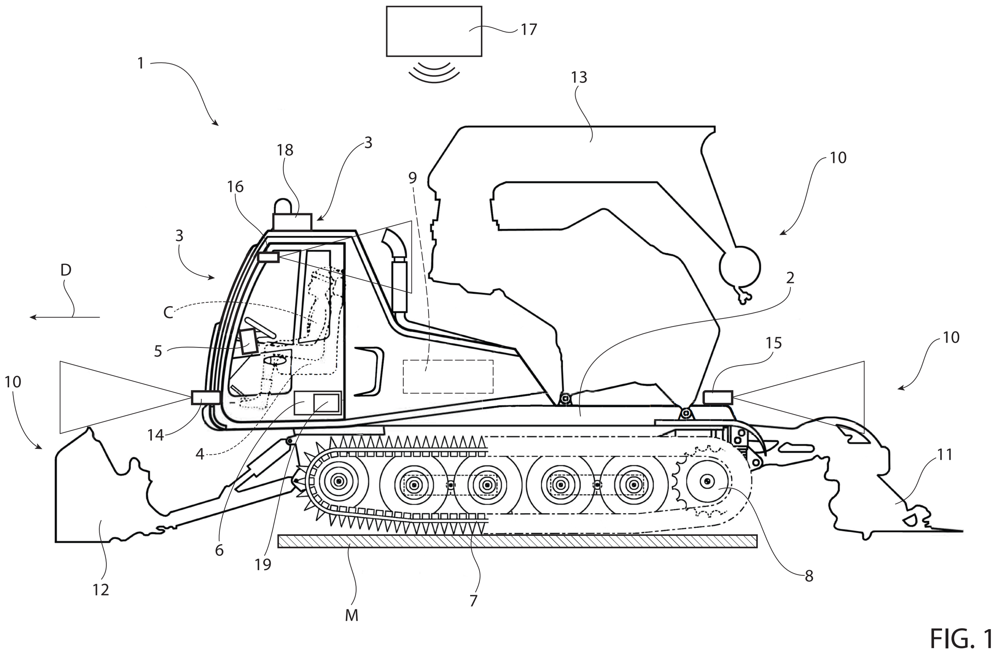

With reference to figure 1, 1 denotes as a whole a crawler vehicle, which in the case shown is used for preparing a snowpack M of ski runs. In particular, the crawler vehicle 1 is a snow groomer.

In more detail, the crawler vehicle 1 is used for preparing downhill ski runs, and/or cross-country ski runs, and/or ski-jumping ramps, and/or half-pipe ski runs, and/or snow-parks, and/or snowmobile tracks.

In accordance with a further embodiment, the crawler vehicle 1 can be used for the maintenance of sandy areas, such as beaches, or for agricultural operations, such as harvesting and/or handling of agricultural products and/or forage silage and/or bagasse harvesting and/or handling.

In addition, in accordance with a further embodiment not shown in the accompanying figures, the crawler vehicle 1 can comprise a shredder preferably positioned at the front of the crawler vehicle 1 and can be used for shredding vegetation.

In accordance with the present invention, the crawler vehicle 1 is configured to advance in a travelling direction D and comprises a frame 2; a driver's cab 3 mounted on the frame 2; a seat 4 for a driver C of the crawler vehicle 1 arranged inside the driver's cab 3; a display 5, which is arranged in the driver's cab 3 and is configured to display a screen reproducing operative information, wherein said screen is divided into a plurality of screen portions; and a control system 6, which is in communication with the display 5 and is configured to control the screen displayed by the display 5.

In particular, said operative information comprises operational parameters of the crawler vehicle 1 and/or information on the operations to be performed and/or on characteristics of the environment surrounding the crawler vehicle 1 and/or images acquired outside the driver's cab 3 and/or videos acquired outside the driver's cab 3.

In more detail, the control system 6 is equipped with wireless connection capabilities, e.g. via a local communication network or via a mobile data network and an internet connection, for connection to a remote monitoring system 17 of a ski resort. In more detail, the remote monitoring system 17 is configured to receive data from the control system 6, to process said received data, and to monitor and/or control a fleet of crawler vehicles 1 as a function of the processed data. In accordance with an embodiment, the remote monitoring system 17 implements artificial intelligence algorithms.

In addition, the crawler vehicle 1 comprises a pair of tracks 7 (only one of which is visible in Figure 1); a pair of drive wheels 8 (only one of which is visible in Figure 1), each of which is coupled to a respective track 7; a propulsion system 9, for example internal combustion or electric or hydrogen-powered, configured to transmit power to the drive wheels 8; and an assembly of accessory devices 10 connected to the frame 2.

In the non-limiting embodiment of the present invention described and shown herein, the assembly of accessory devices 10 comprises a tiller 11, a shovel 12, and a winch 13. It is understood that the crawler vehicle 1 does not necessarily comprise all of the accessory devices 10 mentioned above. For example, the crawler vehicle 1 may comprise any one or two of the accessory devices 10 selected from the tiller 11, shovel 12 and winch 13.

Furthermore, the crawler vehicle 1 comprises at least one acquisition device 14, 15, 16, which is in communication with the control system 6 and is configured to acquire videos and/or images of the environment surrounding the crawler vehicle 1.

In particular, each acquisition device 14, 15, 16 comprises a lidar and/or a radar and/or an infrared video camera and/or a stereoscopic camera and/or a camera and/or a video camera preferably at 270° or 360°.

In accordance with a variant of the present invention, each acquisition device 14, 15, 16 comprises a thermographic camera configured to acquire thermographic images and/or thermographic videos of the environment surrounding the crawler vehicle 1.

In one embodiment, each acquisition device 14, 15, 16 comprising a thermographic camera allows one or more of the following to be detected: snow temperature(s); snow humidity; air temperature(s); air humidity; snowpack profile M thanks to the temperature difference between snowpack M and air; distinguishing a worked surface of snowpack M from an unworked surface of snowpack M. The use of the thermographic camera is particularly useful in conditions of poor visibility, such as at night or in foggy conditions.

In more detail, the acquisition device 14 is arranged in a front portion of the crawler vehicle 1, is facing in the travelling direction D, and is configured to acquire videos and/or images of the environment surrounding the crawler vehicle 1 in the travelling direction D.

In particular, the acquisition device 15 is facing in a direction substantially opposite to the travelling direction D and is configured to acquire video and/or images from a respective rear portion of the crawler vehicle 1.

In the non-limiting embodiment of the present invention described and shown herein, the acquisition device 15 is mounted on a rear portion of the crawler vehicle 1, in a retracted position with respect to the direction of travel and/or the drive wheels 8 and/or the winch 13, and is configured to acquire videos and/or images of a portion of the snowpack M, preferably already processed, to the rear of the tiller 11.

In accordance with a variant of the present invention, not shown in the accompanying figures, the acquisition device 15 is attached to the tiller 11.

In particular, the crawler vehicle 1 comprises a pair of acquisition devices 16 (only one of which is visible in Figure 1), each of which is facing in a direction substantially opposite to the travelling direction D and is configured to acquire video and/or images from a respective external lateral portion of the driver's cab 3.

In practice, the crawler vehicle 1 has no rear-view mirrors. Each acquisition device 16 is configured to acquire videos and/or images corresponding to a view of the exterior of the driver's cab 3 that would be viewed by the driver C of the crawler vehicle 1 through a possible rear-view mirror, while said driver C is seated on the seat 4.

In accordance with further embodiments of the present invention, not shown in the accompanying figures, each acquisition device 14, 15, 16 may be mounted on the shovel 12 or on the winch 13 or along a ski run or on an aerial vehicle, preferably unmanned, such as for example an aerial drone.

In addition, the crawler vehicle 1 may comprise further acquisition devices (not shown in the accompanying figures) arranged, for example, along lateral portions of the crawler vehicle 1 to detect data indicative of the environment surrounding the crawler vehicle 1 in directions transverse to the travelling direction D.

In addition, the crawler vehicle 1 comprises a sensor assembly 18 configured to detect operational information comprising operational parameters of the crawler vehicle 1 and/or information on the operations to be performed and/or about the characteristics of the environment surrounding the crawler vehicle 1.

In accordance with embodiments not shown in the accompanying figures, the sensor assembly 18 can be arranged aboard other crawler vehicles or aboard an aerial vehicle, preferably unmanned, such as an aerial drone.

In particular, the sensor assembly 18 comprises a range sensor configured to detect a residual range of the crawler vehicle 1; and/or a status sensor configured to detect a status of operation of the propulsion system 9 or the assembly of accessory devices 10; and/or a recognition sensor configured to detect any obstacles around the crawler vehicle 1; and/or a lidar sensor configured to detect the characteristics of the snowpack M; and/or a satellite navigation device, for example a GNSS ("Global Navigation Satellite System") type device, which is configured to detect the position and three-dimensional orientation of the crawler vehicle 1.

Furthermore, the control system 6 comprises a processing module 19 configured to process the videos and/or the images acquired by the acquisition device 14, 15, 16 and to identify a position and/or a conformation of reference elements in the environment surrounding the crawler vehicle 1 as a function of said processed data.

In particular, the processing module 19 is configured to identify a position of objects and/or living beings in the environment surrounding the crawler vehicle 1 as a function of said processed data and/or to determine a conformation of the environment surrounding the crawler vehicle 1 as a function of said processed data. In more detail, the processing module 19 implements artificial intelligence algorithms.

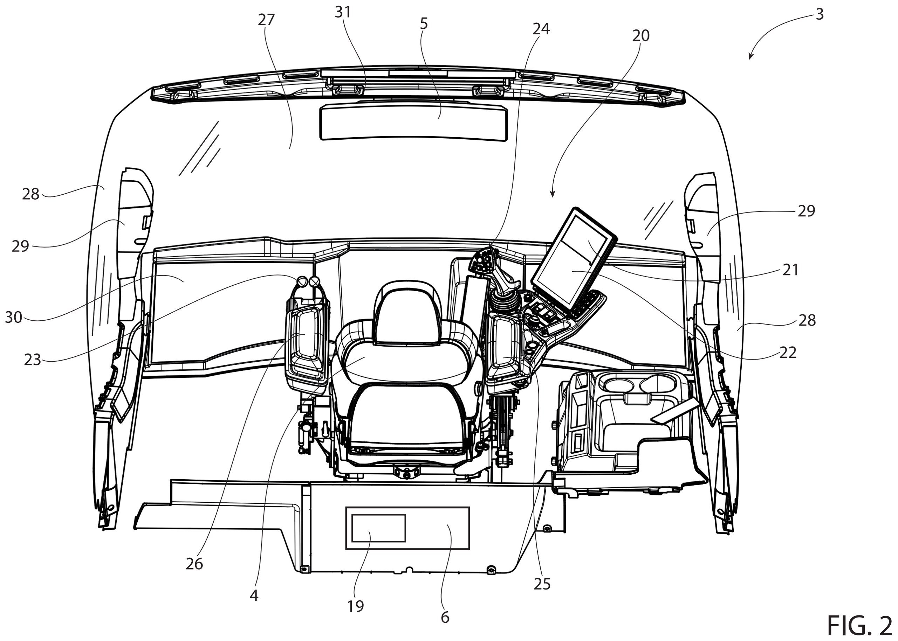

With reference to Figures 2-5, the crawler vehicle 1 comprises a user interface 20, which is in communication with the control system 6 and is configured to receive commands from the driver C of the crawler vehicle 1 and to transmit said commands to the control system 6.

In particular, the user interface 20 is arranged in the proximity of the seat 4 so as to be within reach of the driver C of the crawler vehicle 1 when said driver C is seated on the seat 4.

In the non-limiting embodiment of the present invention described and shown herein, the user interface 20 comprises an interface screen 21 provided with a touch sensor 22 configured to detect a touch or a tap, a control lever 23, and a joystick 24.

In particular, the interface screen 21, thanks to the touch sensor 22, is of the touch screen or touch sensitive type and the control system 6 is configured to receive selections via touches or taps on the interface screen 21 by the driver C of the crawler vehicle 1.

It is understood that the user interface 20 does not necessarily comprise all the devices mentioned above. For example, the user interface 20 may comprise any one or two of the above-mentioned devices selected from the interface screen 21, the control lever 23, and the joystick 24.

In practice, the user interface 20 allows the driver C to control the movement of the crawler vehicle 1 and the operation of the accessory devices 10. In particular, the control lever 23 and the joystick 24 are configured to drive the advancement of the crawler vehicle 1 and to control the movements of the accessory devices 10.

In particular, the control system 6 is configured to control the screen of the display 5 so as to change the operative information reproduced by each screen portion as a function of the commands given by the driver C of the crawler vehicle 1 by means of the user interface 20.

In the non-limiting embodiment of the present invention described and shown herein, the seat 4 comprises a pair of armrests 25 and 26, to which the user interface 20 is coupled. In more detail, the joystick 24 and the interface screen 21 are arranged on the armrest 25. The control lever 23 is arranged on the armrest 26.

In accordance with one embodiment, the driver's cab 3 comprises a windscreen 27, two lateral windows 28, two lateral uprights 29, each of which is arranged between the windscreen 27 and the respective lateral window 28, a lower platform 30, and a roof 31. In particular, the seat 4 is mounted on the lower platform 30 in a central position of the driver's cab 3.

In accordance with an embodiment not shown in the accompanying figures, the driver's cab 3 may comprise further seats for possible passengers of the crawler vehicle 1 arranged alongside the seat 4.

With reference to Figure 2, a first embodiment of the crawler vehicle 1 is shown, in which the display 5 is arranged in front of the seat 4 and extends from the roof 31 of the driver's cab 3. In particular, the display 5 hangs from the roof 31 near the windscreen 27 and extends horizontally.

In practice, the display 5 is arranged in the driver's cab 3 so as to maintain an unobstructed view of the driver C of the crawler vehicle 1 through a central portion of the windscreen 27 while said driver C is seated on the seat 4.

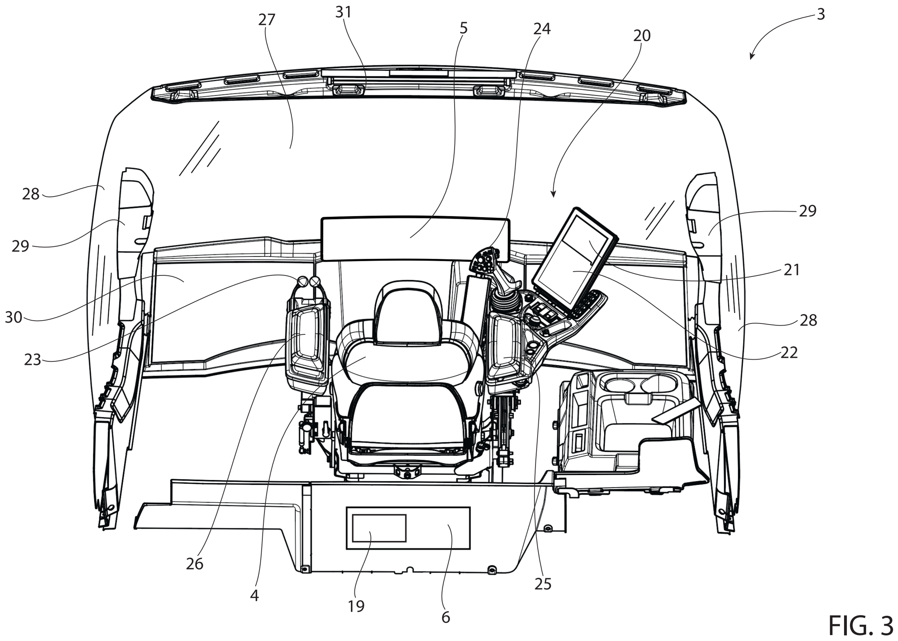

With reference to Figure 3, a second embodiment of the crawler vehicle 1 is shown, in which the display 5 is arranged in front of the seat 4 and is supported by the lower platform 30 of the driver's cab 3. In particular, the display 5 is mounted on the lower platform 30 near the windscreen 27 and extends horizontally.

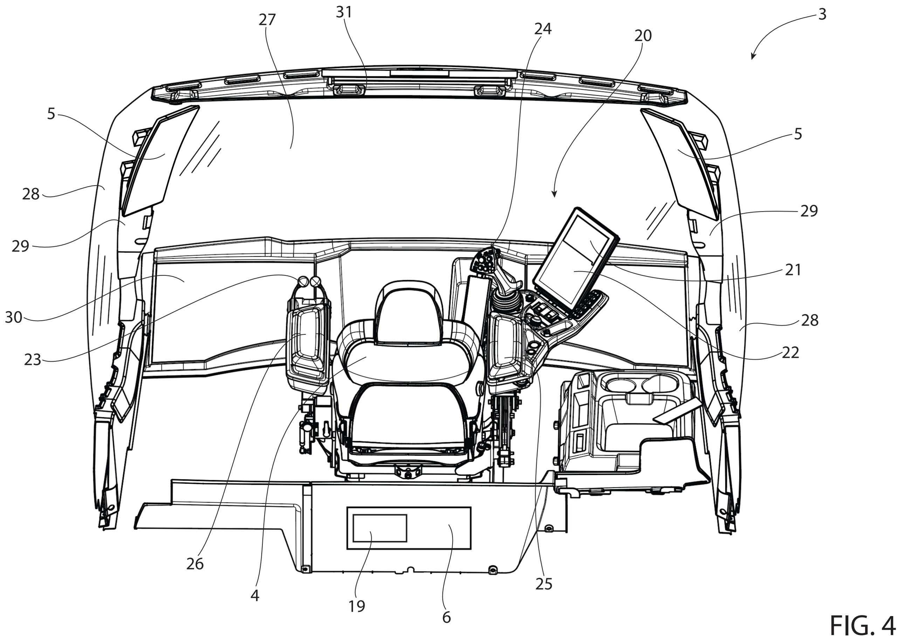

With reference to Figure 4, a third embodiment of the crawler vehicle 1 is shown, wherein the crawler vehicle 1 comprises two displays 5, each of which is arranged on the side of the seat 4 and is fixed to one of the lateral uprights 29 of the driver's cab 3. In particular, each display 5 extends vertically and follows the profile of the respective lateral upright 29.

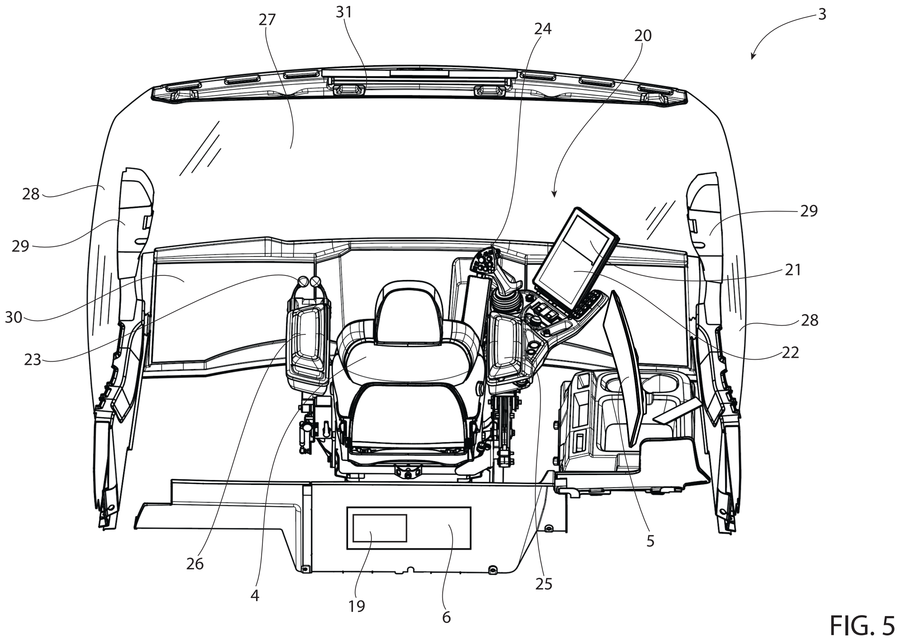

With reference to Figure 5, a fourth embodiment of the crawler vehicle 1 is shown, wherein the display 5 is arranged on the side of the seat 4 and, in particular, alongside the seat 4. In accordance with this embodiment, the display 5 extends horizontally and is arranged between the seat 4 and one of the lateral windows 28.

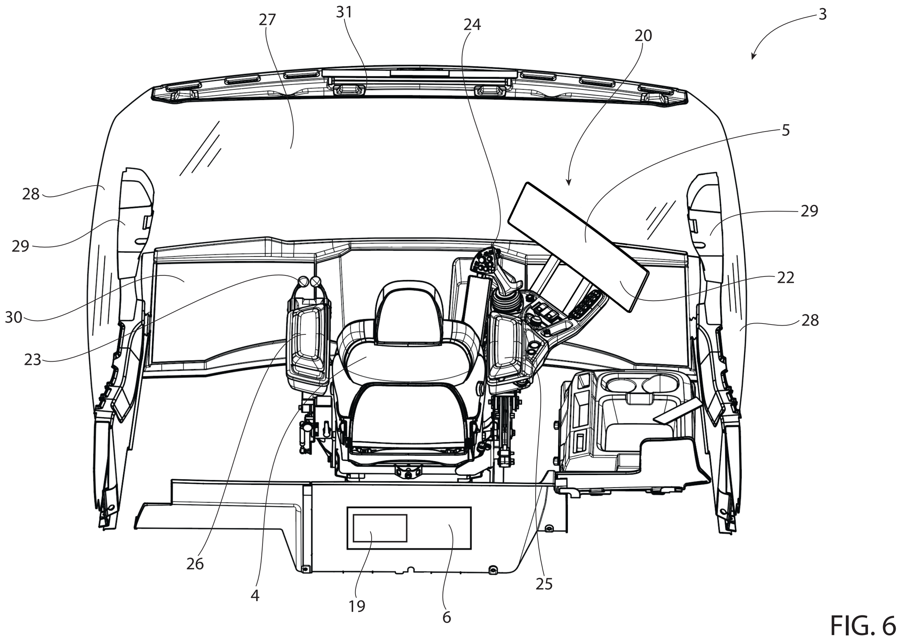

With reference to Figure 6, a fifth embodiment of the crawler vehicle 1 is shown, wherein the display 5 is supported by the armrest 25.

In accordance with this embodiment, the display 5 is part of the user interface 20 and, in particular, the interface screen 21 (Figures 2-5) is omitted. In more detail, the display 5 extends horizontally and is provided with the touch sensor 22.

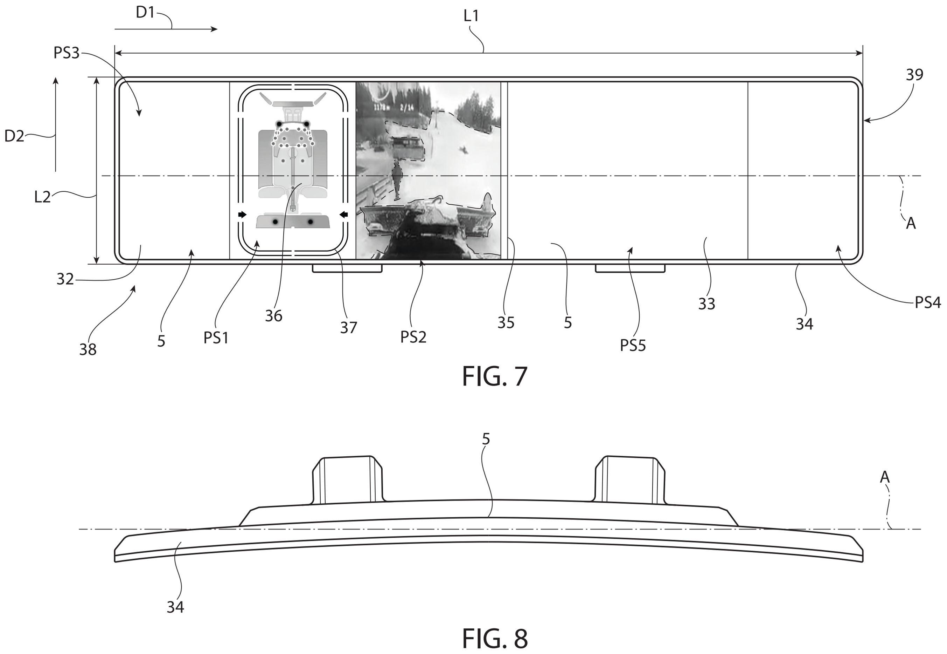

With reference to Figure 7, the display 5 has an elongated conformation and extends along a longitudinal axis A. In particular, the display 5 extends for a length L1 along a direction D1 substantially parallel to the longitudinal axis A and for a length L2 along a direction D2 substantially perpendicular to the direction D1.

In the non-limiting embodiment of the present invention described and shown herein, the length L1 is three times longer than the length L2. Preferably, the length L1 is equal to about four times the length L2.

In particular, the display 5 is divided into two separate sectors 32 and 33. In more detail, the display 5 comprises a frame housing 34 provided with a central element 35, which separates the sectors 32 and 33.

In accordance with a display mode, the control system 6 is configured to control the screen S displayed by the display 5 so as to display in a screen portion PS1 of the plurality of screen portions a representation 36 of at least a portion of the crawler vehicle 1 and a visual indicator 37 indicative of the presence of obstacles in proximity of the crawler vehicle 1.

In particular, the control system 6 is configured to control the screen S displayed by the display 5 so as to display the videos and/or images acquired by the acquisition device 14 in a screen portion PS2 of the plurality of screen portions.

Furthermore, the control system 6 is configured to control the screen S displayed by the display 5 so as to display in real time in a screen portion PS3, PS4 of the plurality of screen portions the videos and/or images acquired by the acquisition device 15 or by the acquisition device 16 in the direction substantially opposite to the travelling direction D of the crawler vehicle 1.

In accordance with the operational configuration described and shown herein, the screen portion PS3 reproduces the videos and/or images acquired by one of the acquisition devices 16 and the screen portion PS4 reproduces the videos and/or the images acquired by the other of the acquisition devices 16.

In other words, the screen portion PS3 reproduces videos and/or images corresponding to a view that would be displayed by the driver C of the crawler vehicle 1 through a possible left rear-view mirror, while said driver C is seated on the seat 4. The screen portion PS4 reproduces the videos and/or the images corresponding to a view that would be displayed by the driver C of the crawler vehicle 1 through a possible right rear-view mirror, while said driver C is seated on the seat 4.

In particular, the control system 6 is configured to display the screen portions PS3 and PS4 at respective lateral ends 38, 39 of the screen S.

Further, the control system 6 is configured to control the screen S displayed by the display 5 so as to display in a screen portion PS5 of the plurality of screen portions further operative information. In particular, said further operative information comprises operational parameters of the crawler vehicle 1, and/or a tachometer, and/or information on residual fuel, and/or information on the electrical status of the crawler vehicle 1, and/or information on possible failures of the crawler vehicle 1, and/or two- or three-dimensional views of the crawler vehicle 1, and/or dynamic views of the crawler vehicle 1, and/or user manuals, and/or instructions for use of the user interface 20, and/or an interactive guide, and/or information for servicing the crawler vehicle 1, and/or information for controlling the heating of the driver's cab 3, and/or radio data, and/or telephony data, and/or information for connection to mobile electronic devices and/or snow depth information, and/or terrain slope information, and/or information on managing a fleet of crawler vehicles 1, and/or information on missions or activities to be performed by the driver of the crawler vehicle 1, and/or information on the configuration of the crawler vehicle 1 and accessory devices 10, and/or information on a ski facility, and/or identification data of a particular driver of the crawler vehicle 1, and/or a navigation system, and/or smart applications to support the use of the crawler vehicle 1, and/or a communication system with further vehicles, and/or information for a remote control of the crawler vehicle 1.

In the case described and shown herein, the screen portions PS1, PS2, PS3, PS4 and PS5 are aligned along the longitudinal axis A of the display 5. In particular, the screen portions PS1, PS2 and PS3 are arranged in the sector 32 and the screen portions PS4 and PS5 are arranged in the sector 33.

It is understood that the screen portions PS1, PS2, PS3, PS4 and PS5 may be displayed on the display 5 in different positions or in accordance with further configurations than shown in Figure 7.

With reference to Figure 8, in plan the display 5 has a curved profile with respect to the longitudinal axis A.

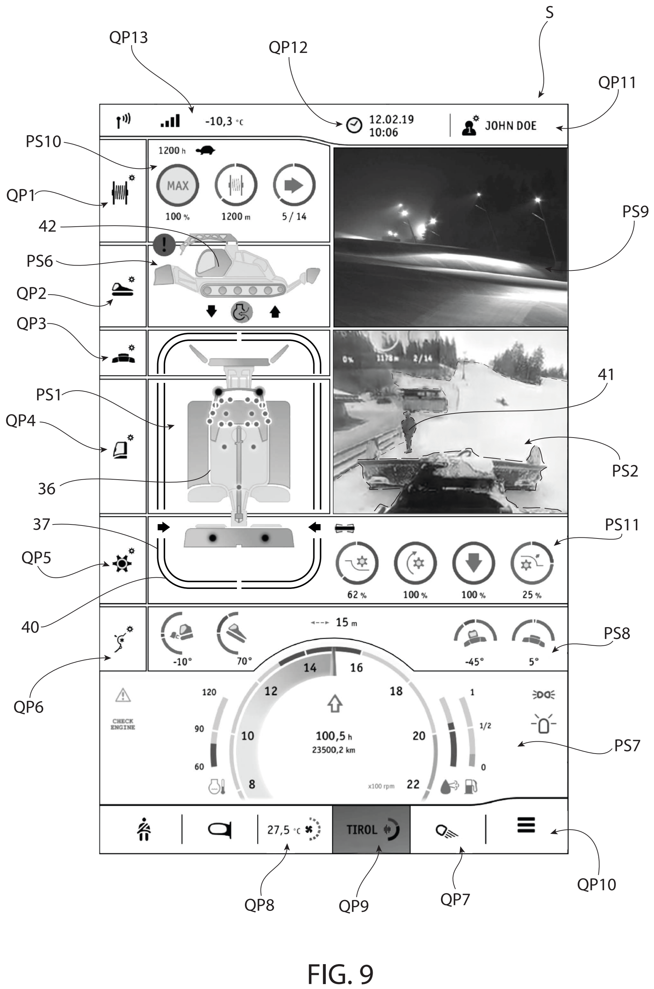

With reference to Figure 9, the screen portion PS1 schematically reproduces the plan view 36 of the crawler vehicle 1. In particular, the representation 36 comprises a representation of the accessory devices 10 connected to the crawler vehicle 1.

In the case described and shown herein, the representation 36 comprises the representation of the tiller 11 and of the shovel 12. In more detail, the representation of the tiller 11 comprises two lateral wings configured to vary their relative positions and the representation of the shovel 12 comprises a central blade and two lateral blades coupled to the central blade and configured to vary their position with respect to the central blade.

In particular, the representation 36 of the crawler vehicle 1 is two-dimensional or three-dimensional. In more detail, the control system 6 is configured to control the orientation of the representation 36 as a function of the commands given by the driver of the crawler vehicle 1 through the user interface 20. In this way, it is possible to rotate the representation 36 of the crawler vehicle 1 as a function of the particular operational needs.

Furthermore, the visual indicator 37 comprises at least one proximity line 40 arranged at least partially around the representation 36 of the crawler vehicle 1. The control system 6 is configured to control a colouring of said proximity line 40 as a function of a distance of an obstacle from a certain portion of the crawler vehicle 1. In particular, the control system 6 is configured to control the colouring of said proximity line 40 at a position of the representation 36 corresponding to the portion of the crawler vehicle 1 in proximity of the obstacle.

In particular, the processing module 19 of the control system 6 is configured to process the videos and/or the images detected by the acquisition device 14, to identify a position and/or a conformation of reference elements 41 in the environment surrounding the crawler vehicle 1 as a function of said processed videos and/or images, and to indicate the contours of each reference element 41 in the screen portion PS2 displayed by the display 5.

In more detail, the processing module 19 comprises a memory in which a database containing comparison images of a plurality of reference elements 41 of different types is stored. The processing module 19 is configured to classify each reference element 41 as a function of the processed data and the comparison images stored in the database.

In the non-limiting embodiment of the present invention described and shown herein, the processing module 19 is configured to classify the reference element 41 as a person.

Further, the control system 6 is configured to control the screen S displayed by the display 5 so as to display in a screen portion PS6 of the plurality of screen portions a representation 42 of the crawler vehicle 1. In particular, the representation 42 is a schematic side view of the crawler vehicle 1 and shows the accessory devices 10 currently connected to the crawler vehicle 1. In more detail, the representation 42 comprises a representation of the tensioning of the tracks 7 of the crawler vehicle 1 by means of arrows positioned below the crawler vehicle 1 and indicating respective directions associated with a tensioning of the tracks 7.

Furthermore, the control system 6 is configured to control the screen S displayed by the display 5 so as to display on a screen portion PS7 of the plurality of screen portions data relating to the advancement speed of the crawler vehicle 1 and/or data relating to the engine revolutions of the crawler vehicle 1 and/or data relating to a control light of the propulsion system 9 and/or total working hours in the life of the crawler vehicle 1 and/or of the total distance travelled in the life of the crawler vehicle 1 and/or of the temperature of a fluid functional to the operation of the crawler vehicle 1, for example of the temperature of a liquid of the propulsion system 9, and/or of the level or levels of residual power supply energy of the propulsion system 9, for example the level of residual fuel in a tank when the propulsion system 9 comprises an internal combustion engine or of the level of residual electrical energy in a battery when the propulsion system 9 comprises an electric motor or fuel and electric power levels when the propulsion system 9 is hybrid and comprises a combustion engine and an electric motor.

Furthermore, the control system 6 is configured to control the screen S displayed by the display 5 so as to display on a screen portion PS8 of the plurality of screen portions data relating to an inclination of the crawler vehicle 1 with respect to a longitudinal axis, in particular data relating to the roll angle of the crawler vehicle 1 around a roll axis; and/or data relating to an inclination of the crawler vehicle 1 around a transverse axis, in particular data relating to the pitch angle around a pitch axis.

Further, the control system 6 is configured to control the screen S displayed by the display 5 so as to display in a screen portion PS9 of the plurality of screen portions a frequency tuning for stations of a car radio.

Furthermore, the control system 6 is configured to control the screen S displayed by the display 5 so as to display in a screen portion PS10 of the plurality of screen portions values relating to the winch 13, preferably one or more of the following values: unwound rope length, towing force in absolute value or in percentage with respect to a maximum towing force.

Furthermore, the control system 6 is configured to control the screen S displayed by the display 5 so as to display in a screen portion PS11 of the plurality of screen portions a schematic representation of a tiller 11, and preferably of any tracing devices connected thereto, and values relating to the tiller 11, preferably one or more of the following values: shaft rotation speed, shaft rotation direction, angle of inclination of the tiller 11 with respect to the snowpack, percentage of snow recirculation within a working chamber of the tiller 11.

The display 5 is further configured to display a further plurality of screen portions QP1-QP13 arranged along at least one of the outer edges of the screen S, preferably along three outer edges of the screen S.

In particular, the control system 6 is configured to control the screen S displayed by the display 5 so as to display one or more of the following further plurality of screen portions: a further screen portion QP1 representing a schematic symbol of the winch 13; a further screen portion QP2 representing a schematic symbol of the crawler vehicle 1; a further screen portion QP3 representing a schematic symbol of the shovel 12; a further screen portion QP4 representing a schematic symbol of the driver's cab 3; a further screen portion QP5 representing a schematic symbol of a shaft of the tiller 11; a further screen portion QP6 representing a schematic symbol of the tiller 11; a further screen portion QP7 representing a symbol of lights; a further screen portion QP8 representing a symbol of a fan and a temperature value; a further screen portion QP9 representing a symbol of a radio tuning and the name of a radio station; a further screen portion QP10 representing a generic symbol preferably but not limited to parallel lines; a further screen portion QP11 schematically representing a person and the name of a driver of the crawler vehicle 1; a further screen portion QP12 schematically representing date and time; a further screen portion QP13 representing an external temperature and symbols indicating reception values of a data communication signal.

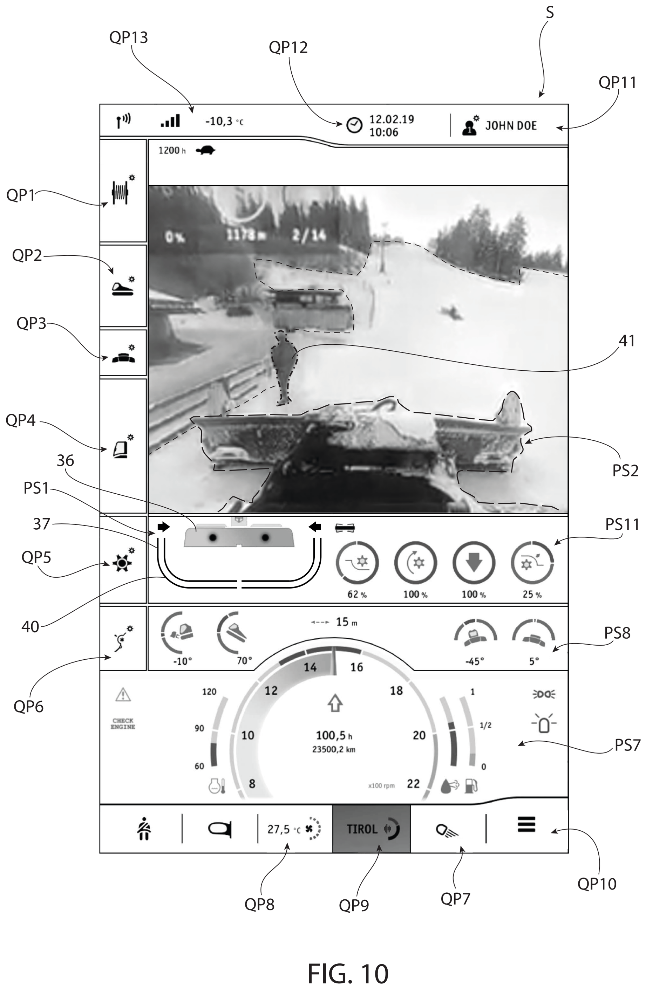

With reference to Figure 10, a detail of the screen S displayed by the display 5 in accordance with a further display mode is shown. In accordance with this configuration, the control system 6 is configured to control the screen S displayed by the display 5 so as to display in a magnified manner the portion of the screen PS2 that reproduces the videos and/or the images acquired by the acquisition device 14.

Furthermore, the control system 6 is configured to control the screen S displayed by the display 5 so as to display in the screen portion PS1 the representation 36 of the crawler vehicle 1 in a partial manner. In more detail, the rear portion of the crawler vehicle 1, in particular of the tiller 11 of the crawler vehicle 1, is reproduced in the screen portion PS1. The proximity line 40 of the visual indicator 37 is arranged partially around the representation 36 of the rear portion of the crawler vehicle 1.

In accordance with an operating mode, the control system 6 is configured to store the different configurations of the screens S of the display 5 selected by different drivers C and to associate a respective driver code with the stored configurations. The control system 6 is configured to recall and display on the display 5 one of the stored configurations when the driver code associated with one of the stored configurations is entered.

Furthermore, the control system 6 is configured to operate in an alternative display mode in which the display of one or more of any of the operative information described above may be extended to two or more screen portions PS1,...,PS11 and may be reproduced transparently above further operative information.

It is evident that variants can be made to the present invention without, however, departing from the scope of protection of the appended claims.

By way of example, in accordance with a variant of the present invention, the control system 6 is divided into a main control unit dedicated only to controlling the crawler vehicle 1 and accessory devices 10 and a secondary control unit dedicated to controlling the display 5 and associated with the main control unit to send and receive data.

## Claims

1. A crawler vehicle, preferably for the preparation of ski runs, the crawler vehicle (1) being configured to advance in a travelling direction (D) and comprising:
- a frame (2);
- a driver's cabin (3) mounted on the frame (2);
- a seat (4) for a driver (C) of the crawler vehicle (1) arranged inside the driver's cabin (3);
- a display (5), which is arranged in the driver's cabin (3) and is configured to display a screen (S) reproducing operative information, wherein said screen (S) is divided into a plurality of screen portions (PS1, ..., PS11); and
- a control system (6), which is in communication with the display (5) and is configured to control the screen (S) displayed by the display (5).

2. The crawler vehicle as claimed in claim 1, wherein said operative information comprises operational parameters of the crawler vehicle (1) and/or information on the operations to be carried out and/or on the characteristics of the environment surrounding the crawler vehicle (1) and/or images acquired outside the driver's cabin (3) and/or videos acquired outside the driver's cabin (3).

3. The crawler vehicle as claimed in claim 1 or 2, and comprising a user interface (20), which is in communication with the control system (6) and is configured to receive commands from the driver (C) of the crawler vehicle (1) and to transmit said commands to the control system (6).

4. The crawler vehicle as claimed in claim 3, wherein the user interface (20) is arranged in the proximity of the seat (4) so as to be within reach of the driver (C) of the crawler vehicle (1) when said driver (C) is seated on the seat (4).

5. The crawler vehicle as claimed in claim 3 or 4, wherein the control system (6) is configured to control the screen (S) of the display (5) so as to modify the operative information reproduced by each screen portion (PS1, ..., PS11), preferably as a function of the commands given by the driver (C) of the crawler vehicle (1) through the user interface (20).

6. The crawler vehicle as claimed in any one of claims 3 to 5, wherein the user interface (20) comprises a touch sensor (22) configured to detect a touch or a swipe and/or a control lever (23) and/or a joystick (24).

7. The crawler vehicle as claimed in any one of the foregoing claims, wherein the display (5) extends for a first length (L1) along a first direction (D1) and for a second length (L2) along a second direction (D2) substantially perpendicular to the first direction (D1); the first length (L1) being greater than three times the second length (L2).

8. The crawler vehicle as claimed in any one of the foregoing claims, wherein the display (5) has a curved profile.

9. The crawler vehicle as claimed in any one of the foregoing claims, wherein the display (5) is arranged in front of the seat (4) or to the side of the seat (4).

10. The crawler vehicle as claimed in any one of the foregoing claims, wherein the driver's cabin (3) comprises a windscreen (27), two lateral windows (28), two lateral uprights (29), each of which is arranged between the windscreen (27) and the respective lateral window (28), a lower platform (30), and a roof (31); the display (5) extending from the roof (31) of the driver's cabin (3), preferably in proximity of the windscreen (27), or being supported by the lower platform (30) of the driver's cabin (3), preferably in proximity of the windscreen (27), or being fixed to one of the lateral uprights (29) of the driver's cabin (3).

11. The crawler vehicle as claimed in any one of the preceding claims, wherein the control system (6) is configured to control the screen (S) displayed by the display (5) so as to display in a first screen portion (PS1) of the plurality of screen portions a representation (36) of at least one portion of the crawler vehicle (1) and a visual indicator (37) indicative of the presence of obstacles in proximity of the crawler vehicle (1).

12. The crawler vehicle as claimed in claim 11, wherein the visual indicator (37) comprises at least one proximity line (40) arranged at least partially around at least one portion of the representation (36) of the crawler vehicle (1); the control system (6) being configured to control a colouring of said proximity line (40) as a function of the distance of an obstacle from the respective portion of the crawler vehicle (1).

13. The crawler vehicle as claimed in claim 11 or 12, wherein said representation (36) of the crawler vehicle (1) is two-dimensional or three-dimensional.

14. The crawler vehicle as claimed in any one of claims 11 to 13, wherein the control system (6) is configured to control the orientation of the representation (36) of the crawler vehicle (1) as a function of the commands given by the driver (C) of the crawler vehicle (1) through the user interface (20).

15. The crawler vehicle as claimed in any one of the foregoing claims, and comprising at least one acquisition device (14, 15, 16), which is in communication with the control system (6) and is configured to acquire video and/or images of the environment surrounding the crawler vehicle (1); the control system (6) being configured to control the screen (S) displayed by the display (5) so as to display the videos and/or the images acquired by the at least one acquisition device (14, 15, 16) in a second screen portion (PS2) of the plurality of screen portions.

16. The crawler vehicle as claimed in claim 15, wherein the control system (6) is configured to process the videos and/or the images acquired by the at least one acquisition device (14, 15, 16), to identify a position and/or a conformation of reference elements (41) in the environment surrounding the crawler vehicle (1) as a function of said processed videos and/or images, and to indicate the contours of each reference element (41) in the second screen portion (PS2) displayed by the display (5).

17. The crawler vehicle as claimed in claim 15 or 16, wherein the at least one acquisition device (15, 16) points in a direction substantially opposite to the travelling direction (D) of the crawler vehicle (1); the control system (6) being configured to control the screen (S) displayed by the display (5) so as to display in real time in a third screen portion (PS3, PS4) of the plurality of screen portions the videos and/or the images acquired by the at least one acquisition device (15, 16) in the direction substantially opposite to the travelling direction (D) of the crawler vehicle (1).

18. The crawler vehicle as claimed in claim 17, wherein the control system (6) is configured to display the third screen portion (PS3, PS4) in a lateral end (38, 39) of the screen (S).

19. The crawler vehicle as claimed in any one of the foregoing claims, wherein the control system (6) is configured to control the screen (S) displayed by the display (5) so as to display in a fourth screen portion (PS5) of the plurality of screen portions further operative information comprising operational parameters of the crawler vehicle (1), and/or a tachometer, and/or information on residual fuel, and/or information on the electrical status of the crawler vehicle (1), and/or information related to any faults of the crawler vehicle (1), and/or two-dimensional or three-dimensional views of the crawler vehicle (1), and/or dynamic views of the crawler vehicle (1), and/or user manuals, and/or user interface instructions (20), and/or information for the maintenance of the crawler vehicle (1), and/or information for the control of the heating of the driver's cabin (3), and/or radio data, and/or telephony data, and/or information for connecting with mobile electronic devices, and/or information on the snow depth, and/or information on the slope of the ground, and/or information on the management of a fleet of crawler vehicles (1), and/or information relating to missions or activities to be carried out by the driver of the crawler vehicle (1), and/or information on the configuration of the crawler vehicle (1) and of auxiliary devices (10), and/or information relating to a ski resort, and/or data identifying a specific driver of the crawler vehicle (1), and/or a navigation system, and/or intelligent applications supporting the use of the crawler vehicle (1), and/or a communication system with other vehicles, and/or information for remote control of the crawler vehicle (1).
